# EUROPÄISCHE PATENTANMELDUNG

(11) **EP 4 339 634 A1**
(43) Veröffentlichungstag der Anmeldung: **20.03.2024**
(21) Anmeldenummer: 22195934.9
(22) Anmeldetag: 15.09.2022
(51) Int. Cl.: G01S 5/02, G01S 5/14, H04W 4/02, H04W 4/50, H04W 4/70, H04W 4/80, H04L 41/08

(54) **VERFAHREN ZUM BESTIMMEN EINER POSITION EINER BEWEGLICHEN UND/ODER BEWEGBAREN EINHEIT ZUR KONFIGURATION DERSELBEN INNERHALB EINES KOMMUNIKATIONSNETZWERKES**

(71) Anmelder: Siemens Aktiengesellschaft, 80333 München (DE)
(72) Erfinder: Hohl, Hubertus, 79219 Staufen (DE); Nickles, Jochen, 90763 Fürth (DE); Sauer, Markus, 81739 München (DE)
(74) Vertreter: Siemens Patent Attorneys

(57) **Zusammenfassung**

Die Erfindung beansprucht ein Verfahren zum Bestimmen einer Position einer beweglichen und/oder bewegbaren Einheit (MENOP) zur Konfiguration derselben, im folgenden mobile Einheit genannt, innerhalb eines Kommunikationsnetzwerkes (KN), in welche wenigstens eine Kommunikationseinheit integriert oder an welche eine solche angeschlossen ist, wobei die Kommunikationseinheit mittels einer für einen Nahbereich ausgestalteten Kommunikationstechnik ansprechbar ist,
wobei mindestens eine Referenzeinheit (RE), deren aktuelle Position im Kommunikationsnetz bekannt ist, eine Kommunikationsverbindung mittels der genannten Kommunikationstechnik mit der Kommunikationseinheit eingeht, wenn die Kommunikationseinheit sich in einem vorgebbaren Nahbereich der mindestens einen Referenzeinheit befindet,
gekennzeichnet durch folgende Verfahrensschritte:
- Bestimmen einer ersten Entfernung der mindestens einen Referenzeinheit zur Kommunikationseinheit durch die Kommunikationseinheit mit Hilfe der eingegangenen Kommunikationsverbindung,
- Übermitteln der aktuellen Position der mindestens einen Referenzeinheit an die Kommunikationseinheit und/oder an die mobile Einheit via des Kommunikationsnetzes,
- Bestimmen der Position der Kommunikationseinheit mittels der bestimmten ersten und der aktuellen Position der mindestens einen Referenzeinheit,
- Bereitstellen der bestimmten Position, welche zur Konfiguration der Kommunikationseinheit und/oder der mobilen Einheit verwendet wird.

## Beschreibung

Die Erfindung betrifft ein Verfahren zum Bestimmen einer Position einer beweglichen und/oder bewegbaren Einheit zur Konfiguration derselben innerhalb eines Kommunikationsnetzwerkes sowie eine zugehörige Kommunikationseinheit bzw. -anordnung und ein zugehöriges Computerprogrammprodukt.

Das Kommunikationsnetzwerk kann in einem industriellen Umfeld (Industrie 4.0), in der Gebäudetechnik, im medizinischen Umfeld oder auch an Umschlagplätze wie Container-Bahnhöfen oder Häfen eingesetzt werden. Die Produktion und Logistik sowie Gebäudetechnik erleben eine durchgehende Digitalisierung mit Technologien aus den Bereichen IoT, AI, Edge, Cloud, Mobile und Distributed Computing, aber auch neuer Kommunikationstechnologien (z.B. 5G, 6G). Es steigt die Nachfrage an Flexibilität beim ad-hoc Einsatz von mobilen Systemen bzw. Einheiten aus der Informationstechnologie (IT) und der operativen Technologie (OT) immer weiter an.

Das Ziel ist es, dass physikalische Einheiten bzw. Geräte (z.B. HMIs, Hardware Buttons, Edge Devices, Sensoren, Tracking Systeme) ad-hoc an verschiedenen Positionen, für verschiedene Aufgaben (z.B. als Rufbutton oder auch zur Steuerung von Smart Home in der Gebäudetechnik) flexibel eingesetzt werden können. Ein weiteres Beispiel sind z.B. mobile, batteriebetriebene Druckschalter mit einem kleinen Statusdisplay, welche flexibel in einer Fertigung platziert werden können, um spezifische Anfragen an ein Transportmanagement oder Warenflussmanagement zu schicken oder ergänzt durch kleine mobile Anzeigen, welche räumlich spezifische Information anzeigen. Ein Beispiel der Anfrage wäre "Fahrerloses Transportsystem zur Abholung von Kisten des Typ1 an die aktuelle Position". Hierbei wäre die Position immer abhängig von der jeweiligen physikalischen Position des Gerätes.

An der dynamischen Aktualisierung der gerade aktuellen Position des Gerätes scheitern die meisten solchen Systeme entweder aus Kostengründen (z.B. Installation einer spezifischen Trackinginfrastruktur und Integration von Trackingsystemkomponenten in die zu trackenden Geräte) oder der Komplexität der Aktualisierung der gerade aktuellen Position des Systems mit der dem Nutzer zur Verfügung stehenden Nutzerschnittstellen (z.B. Einpflegen nur an einem von der aktuellen Position entfernten System, Schwierigkeit bei der korrekten Verortung in der Karte, Komplexität des User Interfaces, Nutzung verschiedener Koordinatensysteme und Kartendarstellungen).

Die Aufgabe der Erfindung besteht darin, eine/ein gegenüber des eingangs genannten Standes der Technik verbessertes Verfahren bzw. Vorrichtung als Einheit bzw. Anordnung anzugeben.

Diese Aufgabe wird durch die unabhängigen Ansprüche gelöst. Vorteilhafte Weiterbildungen sind Gegenstand der abhängigen Ansprüche.

Die Erfindung beansprucht ein Verfahren zum Bestimmen einer Position einer beweglichen und/oder bewegbaren Einheit zur Konfiguration derselben, im folgenden mobile Einheit genannt, innerhalb eines Kommunikationsnetzwerkes, in welche (mobile Einheit) wenigstens eine Kommunikationseinheit integriert oder an welche (mobile Einheit) wenigstens eine solche Kommunikationseinheit angeschlossen ist, wobei die Kommunikationseinheit mittels einer für einen Nahbereich ausgestalteten Kommunikationstechnik ansprechbar ist,
wobei mindestens eine Referenzeinheit, deren aktuelle Position, auch als Referenzposition bezeichnet, im Kommunikationsnetz bekannt ist, eine Kommunikationsverbindung mittels der genannten Kommunikationstechnik mit der Kommunikationseinheit eingeht, wenn die Kommunikationseinheit sich in einem vorgebbaren Nahbereich der mindestens einen Referenzeinheit befindet,
gekennzeichnet durch folgende Verfahrensschritte:
- Bestimmen einer ersten Entfernung (relative Position) der mindestens einen Referenzeinheit zur Kommunikationseinheit (damit indirekt zur mobilen Einheit) durch die Kommunikationseinheit mit Hilfe der eingegangenen Kommunikationsverbindung,
- Übermitteln der aktuellen Position der mindestens einen Referenzeinheit an die Kommunikationseinheit und/oder an die mobile Einheit via des Kommunikationsnetzes,
- Bestimmen der Position der Kommunikationseinheit mittels der bestimmten ersten und der aktuellen Position der mindestens einen Referenzeinheit,
- Bereitstellen der bestimmten Position, welche zur Konfiguration der Kommunikationseinheit und/oder der mobilen Einheit verwendet wird.

Die Referenzeinheit kann statisch, d.h. fix an einem Ort, oder mobile (bewegbar/beweglich) sein.

Mit Hilfe der bereitgestellten Position kann die mobile Einheit von anderen Einheiten des Kommunikationsnetzes angefragte Aufgaben, für die die Position gebraucht wird, steuern (z.B. Rufknopf in einem bestimmten Raum) und/oder durchführen (z.B. Transportfahrt).

Mit Hilfe der für den Nahbereich ausgestalteten Kommunikationstechnik eine Kommunikationsverbindung unabhängig vom und/oder getrennt (separat) vom Kommunikationsnetz hergestellt wird oder werden kann.

Durch die mindestens eine Referenzeinheit kann zumindest eine zweite Entfernung der mindestens einen Referenzeinheit zu der Kommunikationseinheit mit Hilfe der eingegangenen Kommunikationsverbindung und/oder einer weiteren Kommunikationsverbindung zwischen den genannten Einheiten im Nahbereich oder über das Kommunikationsnetz bestimmt und die bestimmte zweiten Entfernung an die Kommunikationseinheit via des Kommunikationsnetzes übermittelt werden.

In die Bestimmung der Position der Kommunikationseinheit kann zusätzlich die bestimmte zweite Entfernung eingehen bzw. einfließen.

Das Bestimmen der Position der mobilen Einheit kann durch die mobile Einheit selbst oder einer dritten Stelle (z.B. Server bzw. Cloud) im Kommunikationsnetz durchgeführt werden. Mit Hilfe der bereitgestellten Position kann die mobile Einheit von anderen Einheiten des Kommunikationsnetzes angefragte Aufgaben, für die die Position gebraucht wird, steuern (z.B. Rufbutton/-knopf in einem bestimmten Raum) und/oder durchführen (z.B. Transportfahrt).

Die konfigurierte mobile Einheit kann mit anderen Einheiten des Kommunikationsnetzes kommunizieren und dadurch seine Position mittteilen. Auf diese Art können die oben genannte Aufgabe erledigt werden.

Die Kommunikation im Nahbereich kann durch folgende Technologien realisiert sein: UWB, NFC, Zigbee, Bluetooth, Radiofrequenz (RF), optisch z.B. via eines von einer Kamera erkannten Kodes (Bar-/QR-Code) bzw. einer Objekterkennung mittels Lidarkamera.

Mit Hilfe der für den Nahbereich ausgestalteten Kommunikationstechnik kann eine Kommunikationsverbindung unabhängig vom und/oder getrennt (separat) vom Kommunikationsnetz hergestellt werden.

Das Kommunikationsnetz kann die gleiche Kommunikationstechnik wie die für den Nahbereich ausgestaltete Kommunikationstechnik verwenden.

Das Kommunikationsnetzwerk kann in einem industriellen Umfeld, in der Gebäudetechnik, im medizinischen Umfeld oder auch an Umschlagplätze wie Container-Bahnhöfen oder Häfen eingesetzt werden.

Die Erfindung bringt den Vorteil mit sich, dass nur schon vorhandene Komponenten bzw. Einheiten (z.B. Firmennetzwerk, bestehende Computerkomponenten, bestehende sich bewegenden Objekte) bzw. Low-Cost-Komponenten (z.B. Bluetooth/UWB-Tags als Sender und Bluetooth/UWB-Tags als Empfänger) zum Einsatz kommen. Sie stellen geringe Anforderungen an die (insbesondere fixe) Infrastruktur und Anwendungsfälle z.B. für sogenannte Brownfield-Szenarien, bei denen eine einfache nachträgliche Integration in bestehende Anlagen erforderlich ist. Ein weiterer Vorteil der Erfindung ist der hohe Grad an Automatisierung bei der Konfiguration der oben genannten mobilen Einheiten. Die Erfindung zeichnet sich auch durch eine signifikante Reduktion der Komplexität bei der Rekonfiguration und Anpassungen innerhalb des Kommunikationsnetzes aus.

Eine Ausführungsform sieht vor, dass in die mobile Einheit ein Beschleunigungssensor integriert oder angeschlossen ist, mit dessen Hilfe eine Veränderung der Position der mobilen Einheit erkannt wird, wobei bei erkannter Veränderung der Position die konfigurierte Position der mobilen Einheit als ungültig gekennzeichnet wird und gegebenenfalls eine Wiederholung der genannten Verfahrensschritte auslöst, um die Kennzeichnung rückgängig zu machen.

Beansprucht wird ferner eine Kommunikationseinheit geeignet für eine bewegliche und/oder bewegbare Einheit, im folgenden mobile Einheit genannt, innerhalb eines Kommunikationsnetzwerkes, welche mit ihrer Position konfigurierbar ist und/oder konfiguriert wird und mittels einer für einen Nahbereich ausgestalteten Kommunikationstechnik ansprechbar ist,
wobei die Kommunikationseinheit mit mindestens einer Referenzeinheit, deren aktuelle Position (Referenzposition) im Kommunikationsnetz bekannt ist, verbindbar ist oder verbunden wird, wenn die Kommunikationseinheit sich in einem vorgebbaren Nahbereich der mindestens einen Referenzeinheit befindet, dadurch gekennzeichnet, dass die Kommunikationseinheit dazu ausgelegt ist, um
- eine erste Entfernung (relative Position) der Kommunikationseinheit zur mindestens einen Referenzeinheit mit Hilfe der Kommunikationsverbindung im Nahbereich zu bestimmen,
- eine Position der Kommunikationseinheit mittels der bestimmten ersten und der aktuellen Position der mindestens einen Referenzeinheit zu bestimmen,
- die bestimmte Position, welche zur Konfiguration der Kommunikationseinheit und/oder der mobilen Einheit verwendet wird, bereitzustellen.

Die Kommunikationseinheit kann zusätzlich dazu ausgelegt sein, eine durch die jeweilige mindestens eine Referenzeinheit bestimmte zweiten Entfernung der Kommunikationseinheit zu der mindestens einen Referenzeinheit über eine Kommunikationsverbindung im Nahbereich oder über das Kommunikationsnetz zu empfangen und die zweite Entfernung bei der Bestimmung der Position der Kommunikationseinheit zu berücksichtigen.

Die (Kommunikations-)Einheit kann als Tag (Etikette, Marke) bzw. Sensor ausgebildet sein und direkt an die mobile Einheit angebracht oder mit ihr abgesetzt (remote) gekoppelt sein. Die Kommunikationseinheit kann dabei eine ID (Identifikationsinformation) via Nachbereichskommunikation (auch Low-Energy-Kommunikation) aussenden oder diese über das Kommunikationsnetz versenden.

Diese ID kann dann von der Referenzeinheit mittels eines Empfängers, welcher auch als Tag ausgebildet sein kann, empfangen werden.

Die Einheit kann mit Hilfe zumindest eines integrierten oder an das System angeschlossenen Prozessors die erwähnten (Verfahrens-)schritte ausführen.

Beansprucht wird ferner eine (Kommunikations-)Anordnung umfassend mindestens eine Referenzeinheit und mindestens eine bewegliche und/oder bewegbare Einheit, in welche wenigstens eine solche Kommunikationseinheit integriert oder an welche eine solche angeschlossen ist, wobei die Kommunikationseinheit mit der mindestens einen Referenzeinheit verbindbar ist oder verbunden wird.

Mit Hilfe der bereitgestellten Position ist die mobile Einheit dazu konfigurierbar oder konfiguriert, von anderen Einheiten des Kommunikationsnetzes angefragte Aufgaben, für die die Position gebraucht wird, zu steuern (z.B. Rufknopf in einem bestimmten Raum) und/oder durchzuführen (z.B. Transportfahrt) .

Das oben genannte Verfahren sowie die oben genannten Verfahrensschritte können computer-implementiert sein. Die Module bzw. Einheiten bzw. die Vorrichtung, die dazu eingerichtet sind, solche Verfahrensschritte auszuführen, können hardware-, firmware- und/oder softwaremäßig implementiert sein und jeweils für sich einen Prozessor aufweisen oder mit einem übergeordneten Prozessor kommunizieren.

Ein weiterer Aspekt der Erfindung ist ein Computerprogramm(produkt) mit Programmcodemitteln zur Durchführung des Verfahrens nach einem der oben erwähnten Ausführungsformen, wenn es in einer Einheit der oben genannten Art bzw. verteilt in einer Anordnung der oben genannten Art abläuft oder auf einem computerlesbaren Speichermedium gespeichert ist.

Das Computerprogramm bzw. -produkt kann auf einem computerlesbaren Speichermedium gespeichert sein. Das Computerprogramm bzw. -produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Vorrichtung bzw. Einheit oder in deren Mitteln integriert sein.

Die oben genannte Einheit bzw. Vorrichtung, die oben genannte Anordnung sowie das Computerprogramm(-produkt) können analog zum oben genannten Verfahren und dessen Weiterbildungen weiter- bzw. ausgebildet sein.

Weitere Vorteile, Einzelheiten und Weiterbildungen der Erfindung ergeben sich aus der nachfolgenden Beschreibung von Ausführungsbeispielen in Verbindung mit den Zeichnungen.
Figur 1 zeigt beispielhaft ein Umfeld für ein Kommunikationsnetz, z.B. ein industrielles Kommunikationsnetz, bei dem das erfindungsgemäße Verfahren angewendet werden kann, und
Figur 2 zeigt ein Beispiel für eine Kommunikationseinrichtung.

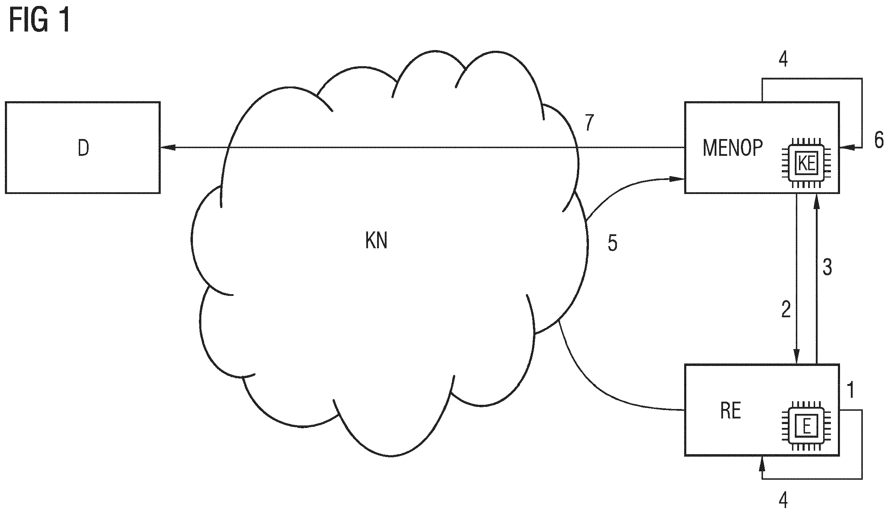

Figur 1 zeigt beispielhaft ein Umfeld für ein Kommunikationsnetz, z.B. ein industrielles Kommunikationsnetz.

Es gibt darin:
- Ein oder mehrere bewegbare oder bewegliche Einheiten MENOP, auch mobile Einheiten genannt, welche Ihre Position benötigen, diese aber nicht direkt selbstbestimmen können (z.B. dynamisch einsetzbare Rufknöpfe, Ladungsträger, Barcodescanner, Mobile Displays).
- Ein oder mehrere Referenzeinheiten RE, die als statische Einheiten ausgeprägt sein können, welche ihre eigenen fixen Positionen kennen (z.B. Produktionsmaschinen, Tore, Kräne), bzw. als mobile Einheiten ausgestaltet sein können, welche sich selbst lokalisieren können (z.B. autonom agierende Roboter bzw. autonom geführte Fahrzeuge (AGVs)). Dem Kommunikationsnetz ist demnach die aktuelle Position (auch als Referenzposition bezeichnet) der einen oder mehreren Referenzeinheiten bekannt.

Diese Einheiten sind mit einem gemeinsamen Kommunikationsnetz KN (z.B. Fabrik WiFi, Fabrik 5G Campusnetz) verbunden. Es ist möglich, dass diese Einheiten RE bzw. MENOP jeweils zusätzlich mit einer Kommunikationseinheit KE bzw. E, (je nach Ausführungsform als Sender und/oder Empfänger) ausgestaltet bzw. ausgestattet werden.

Die Kommunikationseinheiten können als sogenannte Industrielle Tags (Industrial Tags) ausgestaltet sein, welcher je nach Ausführungsform auf der mobilen Einheit MENOP bzw. Referenzeinheit RE aufgebracht bzw. mit dieser gekoppelt sein kann. Die Kommunikationseinheit ist so ausgestaltet, dass sie eine relative Nähe in einer gewissen Genauigkeit zwischen zwei Einheiten automatisch detektiert bzw. detektieren kann. Dadurch kann ein Austausch von bekannten Positionen der Referenzeinheit mit der einen oder mehreren mobilen Einheiten MENOP erfolgen. Durch die Positionsdaten der mobilen und Referenzeinheiten und den Daten der relativen Nähe zwischen den Kommunikationseinheiten KE und E kann die Kommunikationseinheit der mobilen Einheit oder die eine mobile Einheit selbst ihre eigene Position mit einer gewissen Genauigkeit bestimmen und als neue eigene Positionskonfiguration übernehmen.

Ein Beispiel für ein solches Szenario wäre ein fahrerloses Transportsystem als Referenzeinheit, welches im Vorbeifahren einen neu platzierten Rufknopf als bewegbare Einheit MENOP konfiguriert. Die Referenzeinheit und der Rufknopf sind beide mit dem Industrial Tag beispielsweise auf Basis der Kommunikationstechnik UWB für einen vordefinierten oder vorgebbaren Nachbereich ausgestattet. Der Ablauf der Konfiguration in diesem Szenario wäre wie folgt. Die einzelnen Schritte sind mit den Bezugszeichen 1 bis 7 gekennzeichnet.
1: Die Referenzeinheit bestimmt beispielsweise mit einem Standardverfahren aus der Robotik kontinuierlich seine eigene Position (z.B. kamerabasierte und/oder laserbasierte Verfahren aus diesem Umfeld). Damit ist die aktuelle bzw. absolute Position der Referenzeinheit dem Kommunikationsnetz bekannt.
2 und 3: Die Referenzeinheit RE nähert sich der bewegbaren Einheit MENOP an.
Beide Industriellen Tags, in der Figur 1 KE und E, detektieren sich gegenseitig zum Beispiel durch eine Kommunikationstechnik im Nahbereich.
4: Beide Industriellen Tags bestimmen unabhängig voneinander die ungefähre Entfernung bzw. relative Position zueinander. Mit anderen Worten ausgedrückt, Industrielles Tag KE bestimmt eine erste Entfernung und das Industrielle Tag E bestimmt eine zweite Entfernung.
5: Die Referenzeinheit sendet seine aktuelle Position und die von seinem Industriellen Tag bestimmte zweite Entfernung mit entsprechenden Genauigkeiten an die bewegbare Einheit über das Kommunikationsnetz KN. Es ist auch möglich, dass die Referenzeinheit die bestimmte zweite Entfernung über Kommunikationstechnik im Nahbereich an die bewegbare Einheit sendet.
6: Die bewegbare Einheit MENOP bzw. sein Industrielles Tag empfängt und nutzt die Positionsdaten der Referenzeinheit sowie die von seinem Industriellen Tag bereitgestellten relativen Positionsdaten (umfassend die erste Entfernung), um die eigene Position zu berechnen und in seine Konfiguration zu übernehmen.
7: Die bewegbare Einheit ist jetzt vollständig konfiguriert und kann Anfragen von Transportfahrzeugen bzw. anderen Einheiten D im Kommunikationsnetz KN an die aktuelle Position absetzen. Somit können Aufgaben, für die die Position gebraucht wird, gesteuert (z.B. Rufknopf in einem bestimmten Raum) und/oder durchgeführt (z.B. Transportfahrt) werden.

Nähern sich Referenzeinheit und bewegbare Einheit MENOP einander weiter an, könnten die Positionsdaten mit höherer Genauigkeit bestimmt und bereitgestellt werden. Der obige Vorgang kann ohne Einschränkung beliebig oft wiederholt werden, um die Genauigkeit zu verbessern.

Gleichzeitig können auch die Positionsdaten bzw. bestimmte Entfernungen mehrerer Referenzeinheiten in einer bewegbaren Einheit MENOP zu einer Position integriert werden, um eine höhere Genauigkeit zu erzielen.

Ist in der bewegbaren Einheit MENOP oder im Industriellen Tag beispielsweise ein Beschleunigungssensor integriert, das detektiert, dass sich die Position der bewegbaren Einheit verändert hat, kann dieses in der bewegbaren Einheit dazu genutzt werden, um eine konfigurierte Position in der bewegbaren Einheit automatisch als ungültig zu markieren.

In einer weiteren Ausprägung wird die Positionsinformation in einer bewegbaren Einheit mit einer Ablaufzeit versehen, so dass eine regelmäßige Aktualisierung der Positionsdaten über eine Referenzeinheit erforderlich ist.

Falls die Aktualisierung (z.B. Referenzeinheit fährt zufällig an einer bewegbaren Einheit vorbei) der Position der bewegbaren Einheit durch eine Positionskonfiguration, wie zuvor beschrieben, nicht ausreichend für die Konfiguration der bewegbaren Einheit ist, können entweder zeitgesteuert und/oder über spezifische Ereignisse (z.B. bewegbare Einheit mit ungültig markierten Positionsdaten detektiert), "Konfigurationsfahrten" durch die Referenzeinheiten durchgeführt werden. Diese können entsprechend der Lastspitzen der Einheiten eingeplant werden. Ggf. können auch vorteilhafte Anpassungen von Pfaden der Konfigurationsfahrten zur beiläufigen Konfiguration im Rahmen einer Pfadplanung von Aufgaben vorgenommen werden.

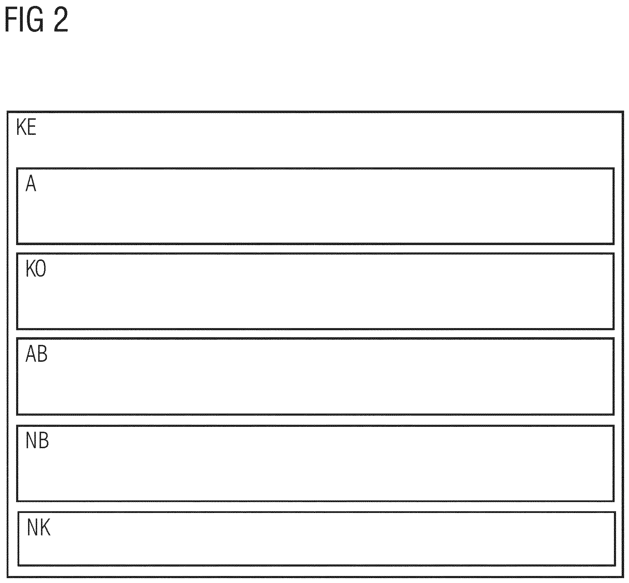

Figur 2 zeigt ein Beispiel für eine Kommunikationseinheit KE, die als Industrielles Tag mit folgenden hardware-, firmware- bzw. softwaremäßigen Modulen ausgestaltet sein kann. Es kann als Modul eine Anwendungsschnittstelle A zum Bereitstellen von Positionsdaten mit der bestimmten Position für Anwendungen aufweisen, um positionsbezogene Aufgaben steuern oder ausführen zu können. Desweiteren kann ein Modul als Konfigurationsschnittstelle KO vorgesehen sein, über die bestimmte Entfernungen und aktuelle Positionen zwischen der bewegbaren Einheit MENOP und einer oder mehreren Referenzeinheiten ausgetauscht werden. Zudem kann als Modul ein Konfigurationsmanagement AB in die Kommunikationseinheit integriert sein, welche das Bestimmen und Aktualisieren der eigenen absoluten Position durchführen und die aktuelle absolute Position bereitstellen kann. Ein in die Kommunikationseinheit integriertes Modul NB zur Nahbereichslokalisierung kann zur Bestimmung von Entfernungen zu anderen Industriellen Tags im Nahbereich auf Basis einer Nahbereichskommunikation (z.B. Bluetooth, UWB) ausgelegt sein. Die Nahbereichskommunikation kann durch ein in die Kommunikationseinheit integriertes Modul NK ausgeführt werden.

Somit ist die Kommunikationseinheit mit den Modulen dazu ausgelegt, um
- eine erste Entfernung (relative Pos.) der Kommunikationseinheit zur mindestens einen Referenzeinheit mit Hilfe der Kommunikationsverbindung im Nahbereich zu bestimmen,
- eine Position der Kommunikationseinheit mittels der bestimmten ersten Entfernung und der aktuellen Position der mindestens einen Referenzeinheit zu bestimmen,
- die bestimmte Position zur Konfiguration der bewegbaren Einheit bereitzustellen.

Die Kommunikationseinheit ist damit zusätzlich dazu ausgelegt, eine durch die jeweilige mindestens eine Referenzeinheit bestimmte zweiten Entfernung (relative Pos.) der Kommunikationseinheit zu der mindestens einen Referenzeinheit über eine Kommunikationsverbindung im Nahbereich oder über das Kommunikationsnetz KN zu empfangen und die zweite Entfernung bei der Bestimmung der Position der Kommunikationseinheit zu berücksichtigen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe/-schritte kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System (Cloud) abzulegen und darauf via Netzwerk zuzugreifen.

Unter "rechner-/computergestützt" bzw. "computerimplementiert" kann im Zusammenhang mit der Erfindung beispielsweise eine Implementierung des Verfahrens verstanden werden, bei dem insbesondere ein Prozessor bzw. eine Recheneinheit, der Teil eines Systems, eines Geräts, einer (Steuerungs)vorrichtung bzw. -anordnung bzw. -einheit und/oder eines Computers und/oder eines oder mehrerer Dienste in einer Rechnerwolke (Cloud) eines Diensterbringers sein kann, mindestens einen Verfahrensschritt des Verfahrens ausführt.

Sofern es in der nachfolgenden Beschreibung nicht anders angegeben ist, beziehen sich die Begriffe "abbilden", "nachbilden", "empfangen", "anwenden", "ausgeben", "bereitstellen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt oder vorliegen können.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequenziellen Verarbeitung bzw. Ausführung von Instruktionen ausgelegt bzw. konfiguriert sein. Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

## Patentansprüche

1. Verfahren zum Bestimmen einer Position einer beweglichen und/oder bewegbaren Einheit (MENOP) zur Konfiguration derselben, im folgenden mobile Einheit genannt, innerhalb eines Kommunikationsnetzwerkes (KN), in welche wenigstens eine Kommunikationseinheit integriert oder an welche eine solche angeschlossen ist, wobei die Kommunikationseinheit mittels einer für einen Nahbereich ausgestalteten Kommunikationstechnik ansprechbar ist,
wobei mindestens eine Referenzeinheit (RE), deren aktuelle Position im Kommunikationsnetz bekannt ist, eine Kommunikationsverbindung mittels der genannten Kommunikationstechnik mit der Kommunikationseinheit eingeht, wenn die Kommunikationseinheit sich in einem vorgebbaren Nahbereich der mindestens einen Referenzeinheit befindet,
**gekennzeichnet durch** folgende Verfahrensschritte:
- Bestimmen einer ersten Entfernung der mindestens einen Referenzeinheit zur Kommunikationseinheit durch die Kommunikationseinheit mit Hilfe der eingegangenen Kommunikationsverbindung,
- Übermitteln der aktuellen Position der mindestens einen Referenzeinheit an die Kommunikationseinheit und/oder an die mobile Einheit via des Kommunikationsnetzes,
- Bestimmen der Position der Kommunikationseinheit mittels der bestimmten ersten und der aktuellen Position der mindestens einen Referenzeinheit,
- Bereitstellen der bestimmten Position, welche zur Konfiguration der Kommunikationseinheit und/oder der mobilen Einheit verwendet wird.

2. Verfahren nach dem vorhergehenden Anspruch, **dadurch gekennzeichnet, dass** durch die mindestens eine Referenzeinheit mindestens eine zweite Entfernung der mindestens einen Referenzeinheit zu der Kommunikationseinheit mit Hilfe der eingegangenen Kommunikationsverbindung und/oder einer weiteren Kommunikationsverbindung zwischen den genannten Einheiten im Nahbereich oder des Kommunikationsnetzes bestimmt und die bestimmte zweiten Entfernung an die Kommunikationseinheit via des Kommunikationsnetzes übermittelt wird.

3. Verfahren nach dem vorhergehenden Anspruch, **dadurch gekennzeichnet, dass** in die Bestimmung der Position der Kommunikationseinheit zusätzlich die bestimmte zweite Entfernung eingeht.

4. Verfahren nach einem der vorhergehenden Ansprüche, **dadurch gekennzeichnet, dass** in die mobile Einheit ein Beschleunigungssensor integriert oder angeschlossen ist, mit dessen Hilfe eine Veränderung der Position der mobilen Einheit erkannt wird, wobei bei erkannter Veränderung der Position die konfigurierte Position der mobilen Einheit als ungültig gekennzeichnet wird und gegebenenfalls eine Wiederholung der genannten Verfahrensschritte auslöst, um die Kennzeichnung rückgängig zu machen.

5. Verfahren nach einem der vorhergehenden Ansprüche, **dadurch gekennzeichnet, dass** mit Hilfe der bereitgestellten Position die mobile Einheit von anderen Einheiten des Kommunikationsnetzes angefragte Aufgaben, für die die Position gebraucht wird, steuert und/oder durchführt.

6. Verfahren nach einem der vorhergehenden Ansprüche, **dadurch gekennzeichnet, dass** mit Hilfe der für den Nahbereich ausgestalteten Kommunikationstechnik eine Kommunikationsverbindung unabhängig vom und/oder getrennt vom Kommunikationsnetz hergestellt wird oder werden kann.

7. Verfahren nach einem der vorhergehenden Ansprüche 1 bis 5, **dadurch gekennzeichnet, dass** das Kommunikationsnetz die gleiche Kommunikationstechnik wie die für den Nahbereich ausgestaltete Kommunikationstechnik verwendet.

8. Kommunikationseinheit (KE) geeignet für eine bewegliche und/oder bewegbare Einheit (MENOP), im folgenden mobile Einheit genannt, innerhalb eines Kommunikationsnetzwerkes (KN), welche mit ihrer Position konfigurierbar ist und/oder konfiguriert wird und mittels einer für einen Nahbereich ausgestalteten Kommunikationstechnik ansprechbar ist,
wobei die Kommunikationseinheit mit mindestens einer Referenzeinheit (RE), deren aktuelle Position im Kommunikationsnetz bekannt ist, verbindbar ist oder verbunden wird, wenn die Kommunikationseinheit sich in einem vorgebbaren Nahbereich der mindestens einen Referenzeinheit befindet,
**dadurch gekennzeichnet, dass** die Kommunikationseinheit dazu ausgelegt ist, um
- eine erste Entfernung der Kommunikationseinheit zur mindestens einen Referenzeinheit mit Hilfe der Kommunikationsverbindung im Nahbereich zu bestimmen,
- eine Position der Kommunikationseinheit mittels der bestimmten ersten und der aktuellen Position der mindestens einen Referenzeinheit zu bestimmen,
- die bestimmte Position, welche zur Konfiguration der Kommunikationseinheit und/oder der mobilen Einheit verwendet wird, bereitzustellen.

9. Kommunikationseinheit nach dem vorhergehenden Anspruch, **dadurch gekennzeichnet, dass** die Kommunikationseinheit zusätzlich dazu ausgelegt ist, eine durch die jeweilige mindestens eine Referenzeinheit bestimmte zweiten Entfernung der Kommunikationseinheit zu der mindestens einen Referenzeinheit über eine Kommunikationsverbindung im Nahbereich oder über das Kommunikationsnetz zu empfangen und die zweite Entfernung bei der Bestimmung der Position der Kommunikationseinheit zu berücksichtigen.

10. Kommunikationsanordnung umfassend mindestens eine Referenzeinheit und mindestens eine bewegliche und/oder bewegbare Einheit, im folgenden mobile Einheit genannt, in welche wenigstens eine Kommunikationseinheit nach einem der vorhergehenden Ansprüche 8 bis 9 integriert oder an welche eine solche angeschlossen ist, wobei die Kommunikationseinheit mit der mindestens einen Referenzeinheit verbindbar ist oder verbunden wird.

11. Anordnung nach dem vorhergehenden Anspruch, **dadurch gekennzeichnet, dass** mit Hilfe der bereitgestellten Position die mobile Einheit dazu konfigurierbar ist oder konfiguriert ist, von anderen Einheiten des Kommunikationsnetzes angefragte Aufgaben, für die die Position gebraucht wird, zu steuern und/oder durchzuführen.

12. Anordnung nach einem der vorhergehenden Ansprüche 6 bis 11, **dadurch gekennzeichnet, dass** mit Hilfe der für den Nahbereich ausgestalteten Kommunikationstechnik eine Kommunikationsverbindung zwischen den genannten Einheiten unabhängig vom und/oder getrennt vom Kommunikationsnetz hergestellt wird oder werden kann.

13. Anordnung nach einem der vorhergehenden Ansprüche 6 bis 11, **dadurch gekennzeichnet, dass** das Kommunikationsnetz derart ausgestaltet ist, dass es die gleiche Kommunikationstechnik wie die für den Nahbereich ausgestaltete Kommunikationstechnik verwenden kann und/oder verwendet.

14. Computerprogrammprodukt umfassend einen durch einen Prozessor ausführbaren Programmkode oder mehrere durch mehrere Prozessoren ausführbare und zusammenwirkende Programmkodemodule, welches oder welche Befehle aufweisen, die die Ausführung des Verfahrens nach einem der vorhergehenden Verfahrensansprüche in der Kommunikationsanordnung nach einen der Ansprüche 10 bis 13 veranlassen.

15. Computerlesbarer Datenträger oder Datenträgersignal umfassend das Computerprogrammprodukt nach dem vorhergehenden Anspruch.
